# EUROPEAN PATENT APPLICATION

(11) **EP 2 960 491 A1**
(43) Date of publication of application: **30.12.2015**
(21) Application number: 15173502.4
(22) Date of filing: 24.06.2015
(51) Int. Cl.: F03D 7/02

(54) **HORIZONTAL SHAFT TYPE WINDMILL AND WAITING METHOD THEREFOR**

(30) Priority: 25.06.2014 JP 2014129827
(71) Applicant: Hitachi, Ltd., Tokyo 100-8280 (JP)
(72) Inventor: KIYOKI, Souichiro, Tokyo, 100-8280 (JP); TOBINAGA, Ikuo, Tokyo, 100-8280 (JP); SAEKI, Mitsuru, Tokyo, 100-8280 (JP)
(74) Representative: MERH-IP Matias Erny Reichl Hoffmann Patentanwälte PartG mbB

(57) **Abstract**

A horizontal shaft type windmill includes a rotor 10 that includes a hub 2 and three pieces or more of blades 4a, 4b, 4c, a nacelle 3 that pivots the rotor 10 through a rotational shaft connected to the hub 2, a tower 1 that supports the nacelle 3, and a control unit that controls at least the pitch angle of the blades 4a, 4b, 4c, in which the control unit detects that the rotor 10 rotates freely and the pitch angle of one of the blades 4a has become uncontrollable, and sets the pitch angle of the blades that are normal 4b, 4c to a pitch angle of fine side or negative fine side upon detecting the blade whose pitch angle has become uncontrollable 4a.

## Description

### FIELD OF THE INVENTION

The present invention relates to a horizontal shaft type windmill and a waiting method therefor, and relates more specifically to a horizontal shaft type windmill including a pitch mechanism capable of changing the angle of the total blade and coping with a case the pitch mechanism of the blade becomes uncontrollable, and a waiting method therefor.

### BACKGROUND OF THE INVENTION

In recent years, horizontal shaft type windmills have been widely put into practical application for commercial use of wind power generation and the like. The horizontal shaft type windmill is generally formed of a rotor in which at least two blades whose cross-sectional shape is formed into an aerofoil shape are attached radially from a hub, a nacelle that is connected to the hub and pivots the rotor through a rotational shaft extended generally in the horizontal direction, and a tower that is disposed generally in the vertical direction and rotatably supports the nacelle. Also, a general horizontal shaft type windmill is configured to include a yaw drive means that is capable of freely drive-controlling a yaw motion that is the rotational motion of the nacelle, a yaw brake that controls the yaw motion, and a rotational shaft brake that brakes rotation of the rotor.

A horizontal shaft type windmill of the downwind system which is one of the horizontal shaft type windmill is configured that a rotor configured to be disposed on the downwind side of a tower is rotated by a force of the wind received by blades, the rotational force is transmitted to a rotational shaft, a generator connected to the rotational shaft is thereby started, and the power is generated. Also, the horizontal shaft type windmill configured to be capable of generating power by that a rotor disposed on the upwind side of the tower is rotated is called an upwind system, and is put into practical application most popularly as a windmill for commercial use.

In the meantime, with an aim of preventing breakage and collapsing under strong wind, the horizontal shaft type windmill described above stops power generation and shifts to a waiting state. Because the windmill rotor which is a wind receiving section is exposed to the wind even in the waiting state of the horizontal shaft type windmill, there is a case of generating a large load that reaches a design load of the windmill under a storm wind. Therefore, it is necessary to study a method in which the horizontal shaft type windmill waits in a state receiving the wind pressure as little as possible.

As a method for reducing the wind pressure in the waiting state of the horizontal shaft type windmill, horizontal shaft type windmills including a pitch mechanism capable of changing the angle of the total blades are widely put into practical use at present. In the horizontal shaft type windmill including a pitch mechanism capable of changing the angle of the total blades, a countermeasure of waiting in a state of the pitch angle (full feather) at which the blades become parallel to the wind when the windmill rotor faces the wind is adopted generally.

On the other hand, a big accident such as collapsing of the horizontal shaft type windmill is liable to occur when the horizontal shaft type windmill is under failure in addition to the time of a storm wind such as a typhoon. Therefore, in designing the windmill, it is required to design the windmill assuming such situation (for example a situation the horizontal shaft type windmill is under failure). Accordingly, to study a countermeasure for reducing the wind pressure received by the horizontal shaft type windmill in a situation the horizontal shaft type windmill is under failure is meaningful in reducing the risk of a big accident and in the economical design.

As a method for reducing the load at the time of such failure of the horizontal shaft type windmill, for example, a horizontal shaft type windmill described in Japanese Unexamined Patent Application No.2006-016984hasbeen proposed. According to the horizontal shaft type windmill described in Japanese Unexamined Patent Application No. 2006-016984, the load is reduced in principle by that the rotor and the rear edge of the blade flap to the downwind even when the yaw drive means is not functioning.

As a failure with a big risk among the failures of the horizontal shaft type windmill described above, a failure of the pitch mechanism (for example, a failure of an actuator (pitch drive mechanism) or a failure of an encoder in which the pitch angle cannot be changed) can be cited.

However, when the pitch mechanism is in failure, the full feather pitch angle (full feather) reducing the wind pressure cannot be maintained, and a big load is generated in the blade. Particularly, when the pitch angle of the pitch mechanism in failure becomes an angle at which the wind receiving area of the blade becomes large (near to the fine angle) and the blade is positioned in the upper side (within the range of approximately ±30 degrees from the right above), a big bending moment is generated at the top of the tower, and the risk of collapsing of the windmill increases.

The present invention has been developed in view of the points described above, and its object is to provide a horizontal shaft type windmill capable of reducing the bending moment generated at the top of the tower and capable of reducing the risk of collapsing of the windmill, and a waiting method therefor.

### SUMMARY OF THE INVENTION

In order to achieve the object described above, the horizontal shaft type windmill of an aspect of the present invention is characterized to include a rotor that includes a hub and three pieces or more of blades, a nacelle that pivots the rotor through a rotational shaft connected to the hub, a tower that supports the nacelle, and a control unit that controls at least the pitch angle of the blades. The control unit may detect that the rotor rotates freely and the pitch angle of one of the blades has become uncontrollable, and sets the pitch angle of the blades that are normal to a pitch angle of fine side or negative fine side upon detecting the blade whose pitch angle has become uncontrollable.

Also, in order to achieve the object described above, the method for a horizontal shaft type windmill of an aspect of the present invention includes the step of setting the pitch angle of blades that are normal to a pitch angle of fine side or negative fine side upon detecting by a control unit that a rotor rotates freely and the pitch angle of one of the blades has become uncontrollable when the horizontal shaft type windmill that includes the rotor including a hub and three pieces or more of the blades, a nacelle that pivots the rotor through a rotational shaft connected to the hub, a tower that supports the nacelle, and a control unit that controls at least the pitch angle of the blades stops power generation and shifts to a waiting state.

According to the present invention, there are effects of capable of reducing the bending moment generated at the top of the tower and reducing the risk of collapsing of the windmill.

### BRIEF DESCRIPTION OF THE DRAWINGS

Fig. 1 is a drawing of a horizontal shaft type windmill of a downwind system which is Embodiment 1 of the horizontal shaft type windmill of the present invention as viewed from the upwind side.
Fig. 2 is a side view of Fig. 1.
Fig. 3 is a block diagram showing a configuration of a control unit mounted on a horizontal shaft type windmill of a downwind system which is Embodiment 1 of the horizontal shaft type windmill of the present invention.
Fig. 4 is a side view showing a horizontal shaft type windmill on which the control unit shown in Fig. 3 is mounted.
Fig. 5 is a side view for explaining a generation mechanism of a bending moment at the top of the tower in a horizontal shaft type windmill of a downwind system which is the horizontal shaft type windmill of an aspect of the present invention.
Fig. 6 is a side view for explaining a generation mechanism of a bending moment at the top of the tower in a horizontal shaft type windmill of an upwind system which is the horizontal shaft type windmill of an aspect of the present invention.
Fig. 7 is a side view for explaining an effect on a bending moment at the top of the tower when the pitch angle of normal blades is adjusted and the thrust force increases in a horizontal shaft type windmill of a downwind system which is the horizontal shaft type windmill of an aspect of the present invention.
Fig. 8 is a side view for explaining an effect on a bending moment at the top of the tower when the pitch angle of normal blades is adjusted and the thrust force increases in a horizontal shaft type windmill of an upwind system which is the horizontal shaft type windmill of an aspect of the present invention.
Fig. 9 is a drawing showing an effect on the flow-in wind of the blades by the rotational speed of a rotor in Embodiment 1 of the horizontal shaft type windmill of the present invention.
Fig. 10 is a front view for explaining an effect on the bending moment at the top of the tower when the pitch angle of normal blades is adjusted and the lift generated in the blades increases in Embodiment 1 of the horizontal shaft type windmill of the present invention.
Fig. 11 is a side view of Fig. 10.
Fig. 12 is a characteristic diagram showing the relation of the lift coefficient and the drag coefficient relative to the angle of incidence in a general aerofoil shape.
Fig. 13 is a characteristic diagram showing the relation of the bending moment at the top of the tower relative to the pitch angle in Case 1 which is a result of a simulation performed by the present inventors in order to confirm the effect of the present invention.
Fig. 14 is a characteristic diagram showing the relation of the bending moment at the top of the tower relative to the pitch angle in Case 2 which is a result of a simulation performed by the present inventors in order to confirm the effect of the present invention.
Fig. 15 is a characteristic diagram showing the relation of the bending moment at the top of the tower relative to the pitch angle in Case 3 which is a result of a simulation performed by the present inventors in order to confirm the effect of the present invention.
Fig. 16 is a characteristic diagram showing the relation of the bending moment at the top of the tower relative to the pitch angle in Case 4 which is a result of a simulation performed by the present inventors in order to confirm the effect of the present invention.
Fig. 17 is a characteristic diagram showing the relation of the rotor rotational speed relative to the pitch angle in Case 1 described above.
Fig. 18 is a characteristic diagram showing the relation of the rotor rotational speed relative to the pitch angle in Case 2 described above.
Fig. 19 is a characteristic diagram showing the relation of the rotor rotational speed relative to the pitch angle in Case 3 described above.
Fig. 20 is a characteristic diagram showing the relation of the rotor rotational speed relative to the pitch angle in Case 4 described above.

### DETAILED DESCRIPTION OF THE PREFERRED EMBODIMENTS

Below, the horizontal shaft type windmill and the waiting method therefor of the present invention will be described based on the embodiments shown in the drawings. Also, in each drawing, the same reference sign will be used for the same constituting component. Further, followings are examples only, and do not intend to limit the preferred embodiments of the present invention.

### [Embodiment 1]

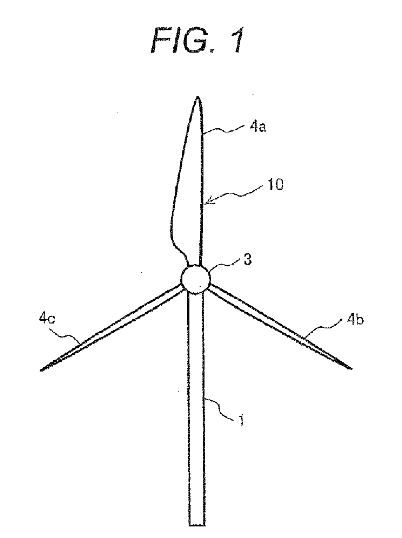

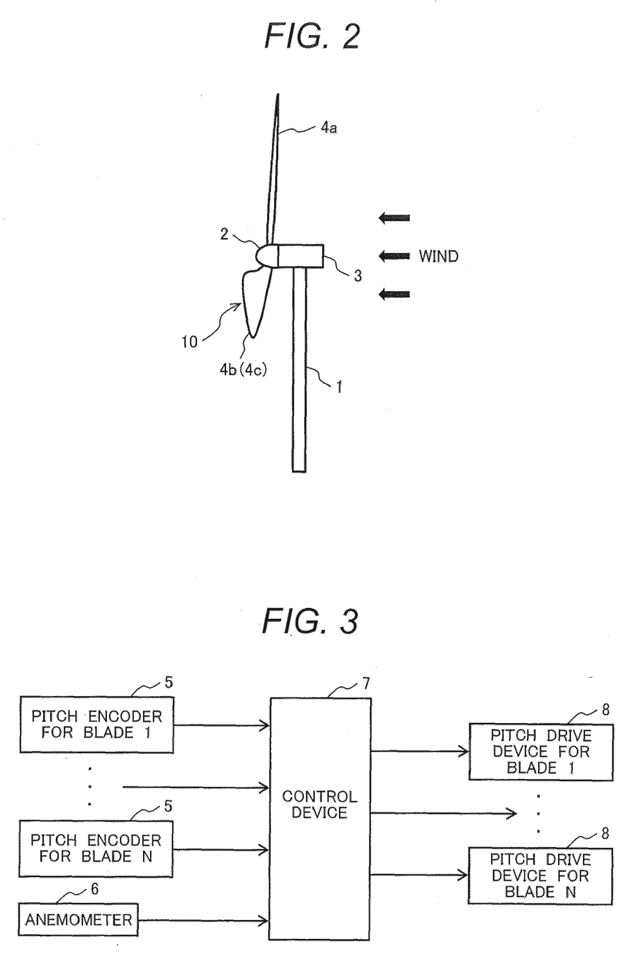

Fig. 1 and Fig. 2 show Embodiment 1 of the horizontal shaft type windmill of the present invention, and show an example of a horizontal shaft type windmill of the downwind system in which the rotor is disposed on the downwind side of the tower.

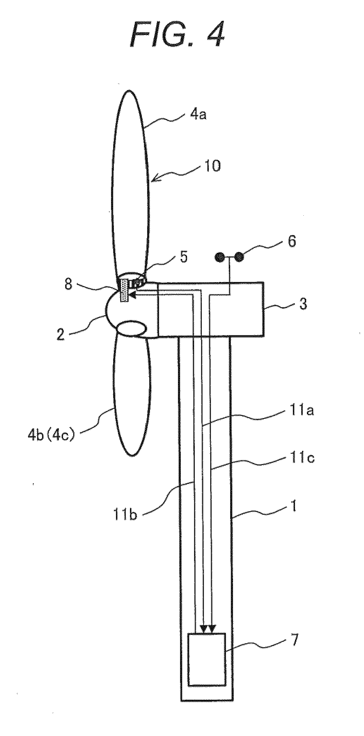

As shown in the drawings, the horizontal shaft type windmill of the present embodiment is generally formed of a rotor 10 in which three pieces or more (three pieces in the present embodiment) of blades 4a, 4b, 4c whose cross-sectional shape is formed into an asymmetric aerofoil shape are attached to a hub 2 radially, a nacelle 3 that pivots the rotor 10 through a main shaft (not illustrated) connected to the hub 2 and extended generally in the horizontal direction, a tower 1 that is disposed generally in the vertical direction and supports the nacelle 3 in a manner of capable yaw-rotation, and a control unit (described below) that controls the pitch angle of the blades 4a, 4b, 4c. Also, an anemometer 6 is attached to the outer surface of the nacelle 3 (refer to Fig. 4).

Further, power transmission devices such as a step-up gear, power generator, and main shaft brake not illustrated are stored in the inside of the nacelle 3, and the main shaft is connected to the respective power transmission devices. The distal end of the main shaft projects to the outside of the nacelle 3, the rotor 10 is attached to the distal end of the main shaft so as to rotate jointly with the main shaft, the rotor 10 includes the hub 2 connected to the main shaft in the center part, and three pieces of blades 4a, 4b, 4c are attached radially to the peripheral surface in the rotational direction of the hub 2.

A configuration of the control unit mounted on the horizontal shaft type windmill of the present embodiment is shown in Fig. 3, and the horizontal shaft type windmill on which the control unit is mounted is shown in Fig. 4 respectively.

As shown in Fig. 3 and Fig. 4, the control unit mounted on the horizontal shaft type windmill of the present embodiment is formed of pitch encoders 5 that are arranged at the root sections of the respective blades 4a, 4b, 4c in order to measure the pitch angle of the respective blades 4a, 4b, 4c, pitch drive devices 8 that are driven for changing the pitch angle of the respective blades 4a, 4b, 4c and are arranged at the boundary sections of the hub 2 and the respective blades 4a, 4b, 4c, and a control device 7 that is arranged at the bottom part inside the tower 1, is connected to the pitch encoders 5 and the pitch drive devices 8 through cables 11a, 11b respectively, issues commands to the pitch drive devices 8 based on the pitch angle of the respective blades 4a, 4b, 4c measured by the pitch encoders 5, and independently controls the pitch angle of the respective blades 4a, 4b, 4c.

The control device 7 can independently control the pitch angle of the respective blades 4a, 4b, 4c by issuing the commands to the pitch drive devices 8 of the respective blades 4a, 4b, 4c based on the pitch angle of the respective blades 4a, 4b, 4c measured by the pitch encoders 5 and, as the case may be, the wind velocity data measured by the anemometer 6 connected to the control device 7 through a cable 11c.

Also, in the present embodiment, it is configured that, when the control unit detects an event the rotor 10 rotates freely and the pitch angle of one blade 4a has become uncontrollable and detects the blade 4a whose pitch angle has become uncontrollable, the pitch angle of the normal blades 4b, 4c is set to a pitch angle of the fine side or the negative fine side described below. More specifically, it is configured that the control device 7 detects the event the rotor 10 rotates freely and the pitch angle of one blade 4a has become uncontrollable, and the pitch drive device 8 sets the pitch angle of the normal blades 4b, 4c to the pitch angle of the fine side or the negative fine side based on the commands from the control device 7.

The event the pitch angle of one blade 4a has become uncontrollable is detected by that the control device 7 detects that there is a difference between the pitch angle command value from the control device 7 and the pitch angle measured by the pitch encoder 5, or by that the control device 7 detects that there is a difference between the rotational speed of the time when the pitch encoder 5 is in failure and the designed value of the rotational speed.

Also, at the time of waiting of the horizontal shaft type windmill, by waiting with the pitch angle of one of the normal blades 4b, 4c being made near to the full feather angle (full feather position), the thrust force received by the normal blades from the wind can be reduced, and overspeed of the rotor 10 can be prevented at the same time.

Further, the full feather angle means a pitch angle at which the rotor 10 does not rotate to any direction when the rotor 10 faces the wind. More specifically, it means substantially90degrees. Here, the word "substantially" means 90 degrees ideally but does not require to be 90 degrees in a strict level.

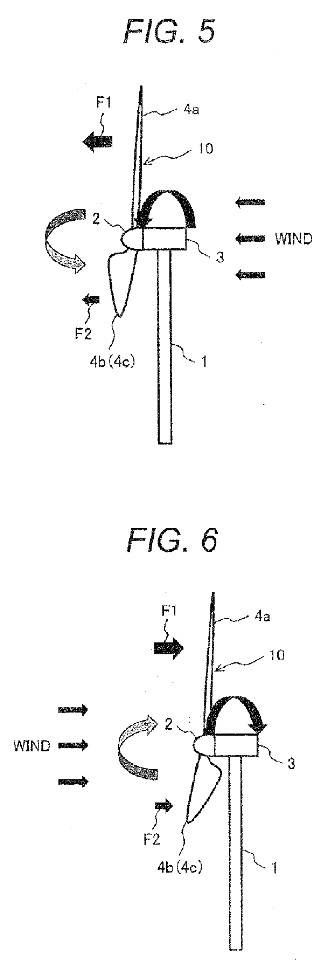

In the meantime, when the pitch angle of one of the blades 4a, 4b, 4c (the blade 4a for example) has become uncontrollable, there is a risk that a large bending moment is generated at the top of the tower 1. Such event occurs when the pitch angle of the blade 4a that has become uncontrollable becomes near to the fine angle or the negative fine angle (more specifically, approximately -20 to 20 degrees or 160 to 200 degrees) and the blade 4a has come to the upper side as the horizontal shaft type windmill of the downwind system shown in Fig. 5 and the horizontal shaft type windmill of the upwind system shown in Fig. 6. At that time, a large thrust force F1 is generated on the upper side of the rotor 10, whereas a thrust force F2 generated on the lower side of the rotor 10 is small, and a large bending moment is generated in the rotor 10 by imbalance of the both (F1 and F2). There is a risk that the bending moment is transferred to the top of the tower 1 and bearings and the like at the top of the tower 1 are broken.

With respect to the blade 4a that has become uncontrollable, for example, a case the pitch is fixed and the blade 4a does not move, a case the brake fixing the pitch cannot work and the blade 4a freely moves, and the like can be cited.

Also, the fine angle is an angle at which, when the rotor 10 faces the wind, the direction of the blade 4a becomes substantially perpendicular to the wind direction, and the drag from the wind becomes near to the maximum value. As the way of forming this fine angle, there are two kinds of substantially 0 degree and 180 degrees. The fine angle means the case of substantially 0 degree in particular, and the negative fine angle means the case of substantially 180 degrees in particular. Also, the word "substantially" means 0 degree or 180 degrees ideally but does not require to be 0 degree or 180 degrees in a strict level.

Here, how to reduce the load of the time a large bending moment is transferred to the top of the tower 1 described above by properly setting the pitch angle of the normal blades 4b, 4c is studied.

With respect to the effects of shifting the pitch angle of the normal blades 4b, 4c from the full feather angle on the bending moment at the top of the tower 1, there are mainly three effects described below.

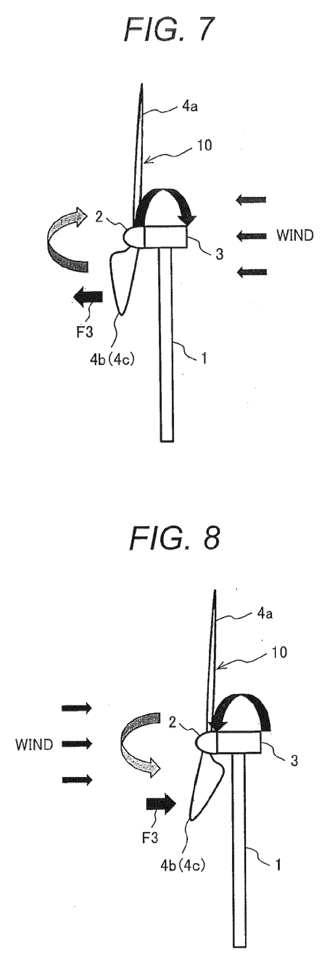

The first effect is that, as the horizontal shaft type windmill of the downwind system shown in Fig. 7 and the horizontal shaft type windmill of the upwind system shown in Fig. 8, a thrust force F3 is generated in the normal blades 4b, 4c, imbalance of the thrust force generated in the abnormal blade 4a and the thrust force F3 applied to the rotor 10 reduces, and thereby the bending moment at the top of the tower 1 reduces.

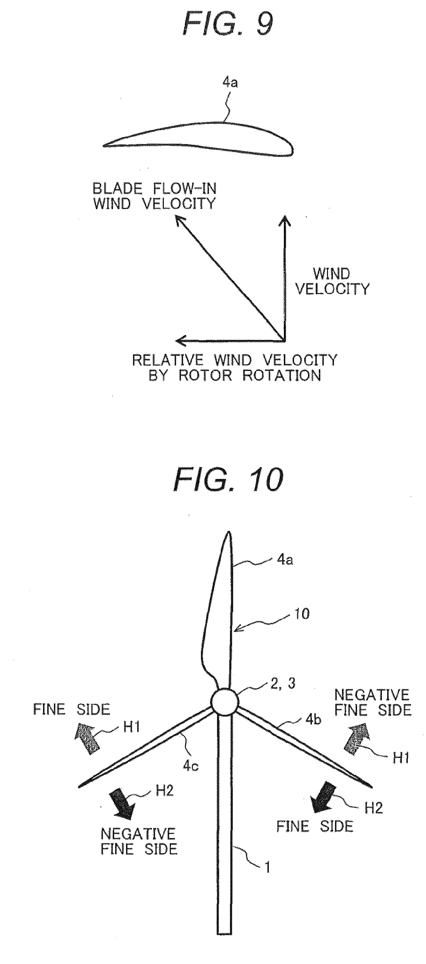

The second effect is that the rotational speed of the rotor 10 changes, and the velocity and the angle of the wind flowing in to the blade 4a change as shown in Fig. 9. Main effect caused thereby is that, because the velocity of the wind flowing in to the uncontrollable blade 4a increases, the thrust force applied to the upper side of the rotor 10 increases, and the bending moment at the top of the tower 1 increases.

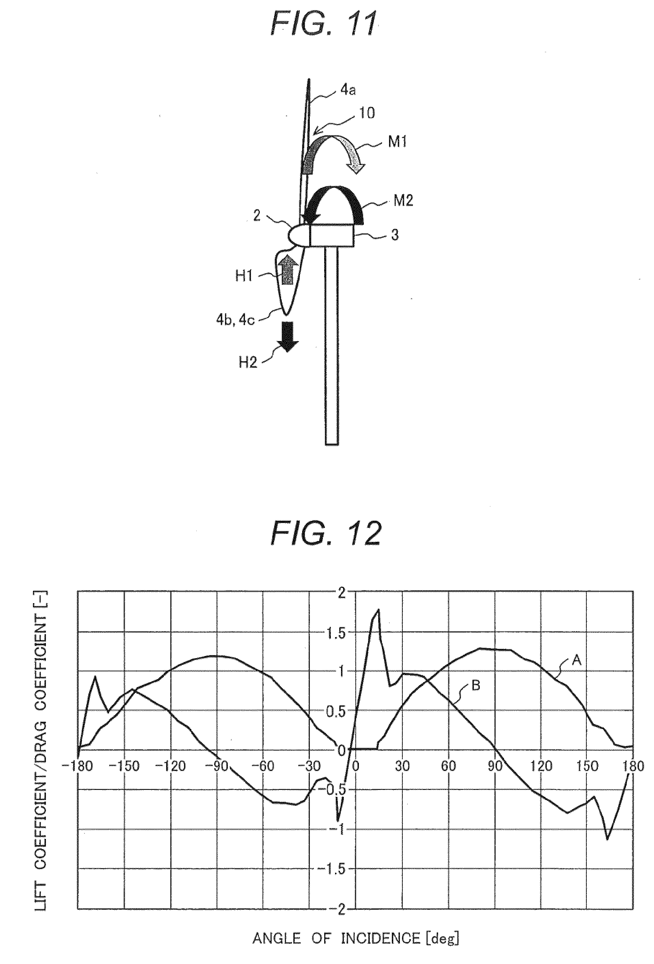

The third effect is that, as shown in Fig. 10 and Fig. 11, the lift is generated in the normal blades 4b, 4c, and, by the vertical component of the lift and the offset of the rotor 10 and the center of the tower 1, a bending moment is generated at the top of the tower 1. When an upward vertical lift H1 is generated, a bending moment M1 is applied to the top of the tower 1 in the direction of tipping the windmill to the opposite side of the rotor 10, and, in the case of the horizontal shaft type windmill of the downwind system in which the rotor 10 is disposed on the downwind side of the tower 1, the bending moment at the top of the tower 1 is reduced. On the contrary, when a downward vertical lift H2 is generated, a bending moment M2 is applied to the top of the tower 1 in the direction of tipping the windmill to the rotor 10 side, and, in the case of the horizontal shaft type windmill of the upwind system in which the rotor 10 is disposed on the upwind side of the tower 1, the bending moment at the top of the tower 1 is reduced.

In Fig. 12, the relation of the lift coefficient and the drag coefficient relative to the angle of incidence in a typical aerofoil shape is shown. When the rotor 10 faces the wind, the angle of incidence becomes substantially 0 degree in the case of the full feather angle (the pitch angle is substantially 90 degrees), the angle of incidence becomes substantially 90 degrees in the case of the fine angle (the pitch angle is substantially 0 degree), and the angle of incidence becomes substantially -90 degrees in the case of the negative fine angle (the pitch angle is substantially 180 degrees).

As shown in Fig. 12, because the drag coefficient A does not change in the vicinity of 0 degree of the angle of incidence, in order to reduce the load by the first effect described above, it is necessary to shift the pitch angle from the full feather angle comparatively largely. However, because the rotational speed of the rotor 10 tends to increase by doing so, the load increases by the second effect described above, and the risk of the overspeed of the rotor 10 increases. On the other hand, because the lift coefficient B changes in the vicinity of 0 degree as shown in Fig. 12, there is a merit that the third effect described above is exhibited even when the pitch angle is not shifted so much from the full feather angle.

Therefore, the present embodiment is to reduce the load by mainly utilizing the third effect described above.

More specifically, in the case of the horizontal shaft type windmill of the downwind system, the pitch angle is set to the negative fine side of the full feather angle for the blade that advances by 0-180 degrees from the blade 4a that has become uncontrollable in the normal rotational direction, and the pitch angle is set to the fine side of the full feather angle for the blade that is delayed by 0-180 degrees from the blade 4a that has become uncontrollable in the normal rotational direction.

Also, in the case of the horizontal shaft type windmill of the upwind system, the pitch angle is set to the fine side of the full feather angle for the blade that advances by 0-180 degrees from the blade 4a that has become uncontrollable in the normal rotational direction, and the pitch angle is set to the negative fine side of the full feather angle for the blade that is delayed by 0-180 degrees from the blade 4a that has become uncontrollable in the normal rotational direction. The angle for shifting from the full feather angle is made 40 degrees or less for example.

Further, to set one of the normal blades 4b, 4c near to the full feather in order to reduce the risk of the overspeed of the rotor 10 is also one method. When such method is not employed, it is necessary to be set carefully so that the rotational speed of the rotor 10 does not increase.

The bending moment at the top of the tower 1 conspicuously increases when the wind velocity is high, and it is also possible to apply the wind velocity condition such as performing the present countermeasures at 30 m/s or more for example.

With the present embodiment described above, when the pitch of one blade has become uncontrollable, the bending moment generated at the top of the tower can be reduced while suppressing increase of the risk of the overspeed of the rotor, and reduction of the collapsing risk of the windmill and the economical windmill design are effected.

Because the present inventors confirmed the effects of the present invention by simulation, the detail thereof will be described next. Also, with respect to the windmill, the horizontal shaft type windmill of the downwind system in which the rotor 10 is disposed on the downwind side of the tower 1 was assumed. With respect to the rotational direction of the rotor 10, the clockwise direction as viewed from the windward is made the normal direction (positive in the coordinate axis), and the blades 4a, 4b, 4c are arranged clockwise as viewed from the windward.

As the analysis cases, four cases of Cases 1-4 shown in Table 1 were performed. In all cases, the blade 4a was made to be in the state of being uncontrollable and being fixed at 0 degree of the pitch angle at which the thrust force was maximized, and other normal blades 4b, 4c were set so as to diversify the pitch angle.

**[Table 1]**

| | Blade 4a Pitch Angle (Uncontrollable) | Blade 4b Pitch Angle (Normal) | Blade 4c Pitch Angle (Normal) |
|---|---|---|---|
| Case 1 | 0deg | 90deg | 0 to 180 deg |
| Case 2 | 0deg | 0 to 180 deg | 90deg |
| Case 3 | 0deg | 0 to 180 deg | 0 to 180 deg |
| Case 4 | 0deg | 0 to 180 deg | 180 to 0 deg |

In Cases 1 and 2, the pitch angle of one of the normal blades 4b, 4c was made 90 degrees of the full feather angle to suppress increase of the rotational speed of the rotor 10, the pitch angle of the other was set to respective angles from 0 degree of the fine angle to 180 degrees of the negative fine angle, and the analysis was made. In Case 3, the pitch angle of two pieces of the normal blades 4b, 4c was made the same pitch angle and was set to various angles of 0-180 degrees, and the analysis was made. In Case 4, the pitch angle of two pieces of the normal blades 4b, 4c was made the pitch angle symmetrical with 90 degrees as a boundary and was set to various angles of 0-180 degrees, and the analysis was made.

The wind model inputted to the windmill was made a fluctuation wind with the average wind velocity of 55 m/s, and the analysis was made with the average value of the yaw angle that was the shift of the orientation angle of the nacelle 3 and the wind direction being made -8, 0, 8 degrees respectively. The analysis time was made 10 min per one analysis.

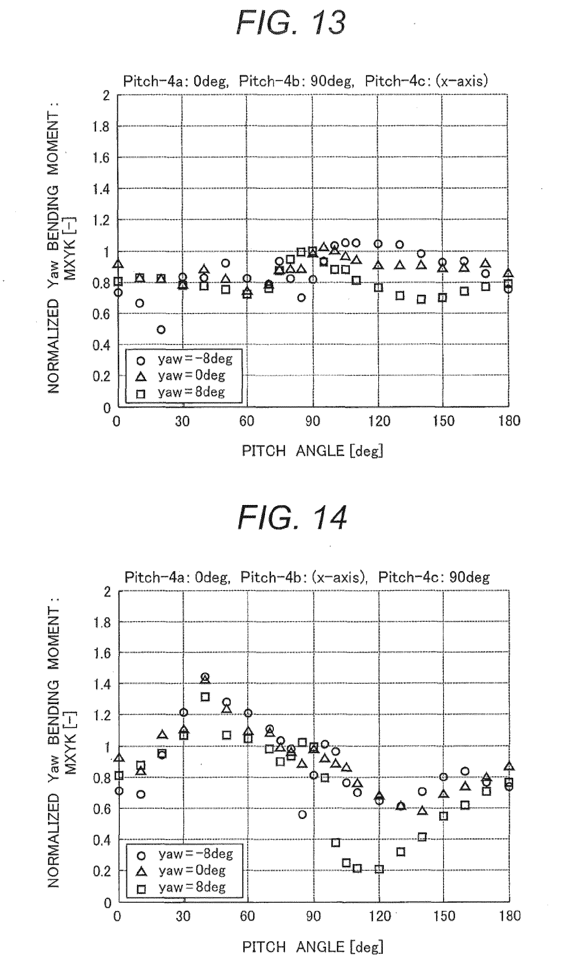

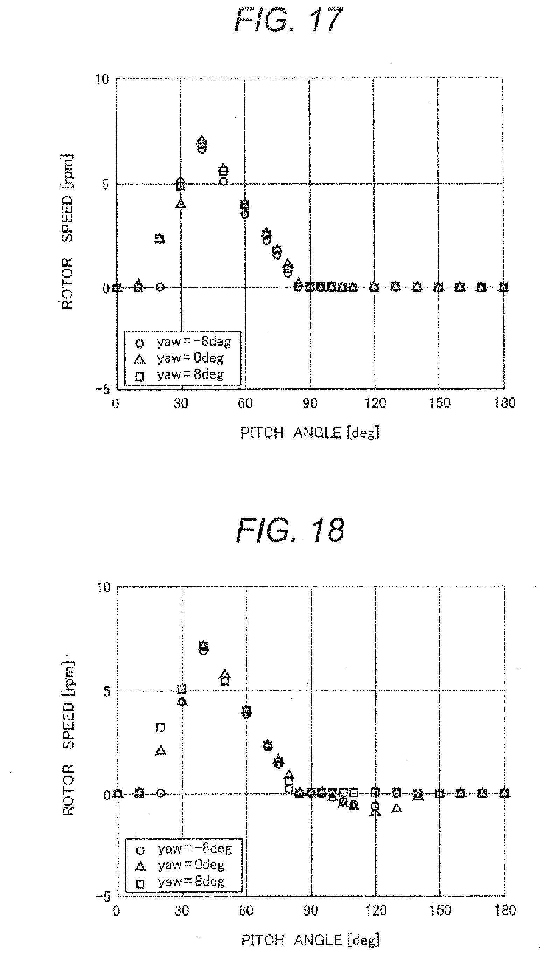

The maximum values of the bending moment at the top of the tower 1 within 10 min of the analysis time with respect to the pitch angle for each case are shown in Fig. 13, Fig. 14, Fig. 15, and Fig. 16. Here, in order to confirm increase/decrease from the pitch angle of 90 degrees, the bending moment was normalized by the maximum value at the pitch angle of 90 degrees. Also, the average values of the rotational speed of the rotor 10 are shown in Fig. 17, Fig. 18, Fig. 19, and Fig. 20.

Here, evaluation of the bending moment at the top of the tower 1 will be attempted. Although there are three data according to the difference in the yaw angle even for the same pitch angle, because any situation possibly occurs according to the variation in the wind direction, evaluation will be made by the maximum value.

It is known that, with respect to Cases 1 and 2 in which the pitch angle of one of the normal blades 4b, 4c is made 90 degrees, in Case 1 (Fig. 13, Fig. 17) in which the pitch angle of the blade 4c that is delayed by 120 degrees relative to the normal direction is operated, the bending moment at the top of the tower 1 reduces when the pitch angle is set to the fine side (0 degree side) of the full feather angle of 90 degrees, and in Case 2 (Fig. 14, Fig. 18) in which the pitch angle of the blade 4b that advances by 120 degrees relative to the normal direction is operated, the bending moment at the top of the tower 1 reduces when the pitch angle is set to the negative fine side (180 degrees side) of the full feather angle of 90 degrees. The bending moment at the top of the tower 1 reduces when the deflection amount from the full feather angle of 90 degrees is up to approximately 30-40 degrees, is minimized in Case 2 (Fig. 14, Fig. 18), and reduces by approximately 40% when the pitch angle is operated from full feather to the negative fine side by 40 degrees (near to 130 degrees).

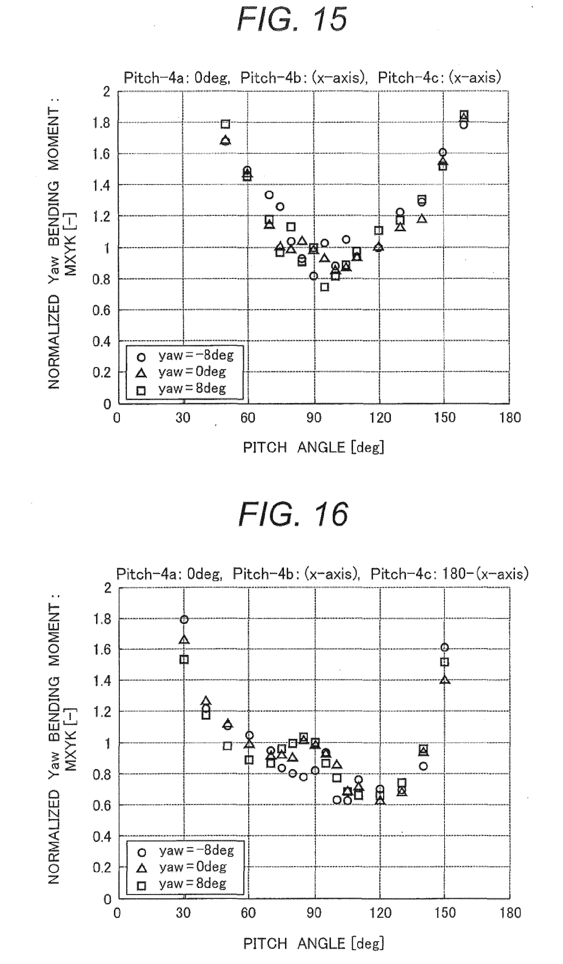

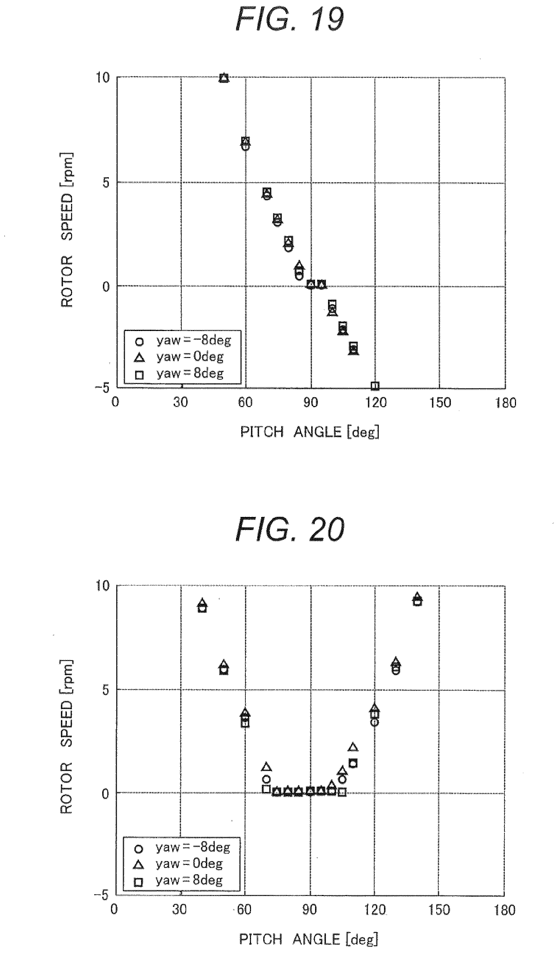

In Case 3 (Fig. 15, Fig. 19) in which the normal blades 4b, 4c are set to the same pitch angle, in any pitch angle, the bending moment at the top of the tower 1 is equal to or greater than the value at the full feather angle of 90 degrees, and the load reduction effect cannot be recognized.

In Case 4 (Fig. 16, Fig. 20) in which two pieces of the normal blades 4b, 4c are set to the angle symmetrical with 90 degrees as a boundary, the load reduction effect is large when the pitch angle of the blade 4b that advances by 120 degrees relative to the normal rotational direction is set to the negative fine side (180 degrees side) of the full feather angle of 90 degrees and the pitch angle of the blade 4c that delays by 120 degrees relative to the normal rotational direction is set to the fine side (0 degree side). However, when the deviation from the full feather angle of 90 degrees is too much, the load increases by increase of the rotational speed of the rotor (refer to Fig. 20), and therefore the pitch angle should be set carefully.

From the analysis results described above, it is understood that, according to the present invention, the bending moment generated at the top of the tower can be reduced while suppressing increase of the risk of the overspeed of the rotor.

Further, the present invention is not limited to the embodiments described above, and various modifications are included therein. For example,the embodiments described above have been explained in detail in order to facilitate easy understanding of the present invention, and the present invention is not necessarily limited to those including all configurations described. With respect to a part of the configuration of an embodiment, it is possible to effect addition, deletion and replacement of the configuration.

### Reference Signs List

- 1: tower
- 2: hub
- 3: nacelle
- 4a, 4b, 4c: blade
- 5: pitch encoder
- 6: anemometer
- 7: control device
- 8: pitch drive device
- 10: rotor
- 11a, 11b, 11c: cable

## Claims

1. A horizontal shaft type windmill, comprising:
a rotor (10) that includes a hub (2) and three pieces or more of blades (4a, 4b, 4c);
a nacelle (3) that pivots the rotor (10) through a rotational shaft connected to the hub (2);
a tower (1) that supports the nacelle (3); and
a control unit that controls at least the pitch angle of the blades (4a, 4b, 4c), wherein
the control unit detects that the rotor (10) rotates freely and the pitch angle of one of the blades (4a) has become uncontrollable, and sets the pitch angle of the blades that are normal (4b, 4c) to a pitch angle of fine side or negative fine side upon detecting the blade (4a) whose pitch angle has become uncontrollable.

2. The horizontal shaft type windmill according to claim 1, wherein
the control unit includes pitch encoders (5) that measure the pitch angle of the respective blades (4a, 4b, 4c), pitch drive devices (8) that are driven in order to change the pitch angle of the respective blades (4a, 4b, 4c), and a control device (7) that issues a command to the pitch drive devices (8) based on the pitch angle of the respective blades (4a, 4b, 4c) measured by the pitch encoders (5) and independently controls the pitch angle of the respective blades (4a, 4b, 4c), detects by the control device (7) that the rotor (10) rotates freely and the pitch angle of one of the blades (4a) has become uncontrollable, and sets the pitch angle of the blades that are normal (4b, 4c) to a pitch angle of fine side or negative fine side by the pitch drive devices (8) based on the command from the control device (7).

3. The horizontal shaft type windmill according to claim 2, wherein
an event the pitch angle of one of the blades (4a) has become uncontrollable is detected by that the control device (7) detects difference between a pitch angle command value from the control device (7) and the pitch angle measured by the pitch encoder (5).

4. The horizontal shaft type windmill according to claim 2, wherein
an event the pitch angle of one of the blades (4a) has become uncontrollable is detected by that the control device (7) detects difference between a rotational speed of the time when the pitch encoder (5) is in failure and a designed value of the rotational speed.

5. The horizontal shaft type windmill according to any one of claims 1 to 4, wherein
a horizontal shaft type windmill of a downwind system in which the rotor (10) is disposed on the downwind side of the tower (1) sets a blade that is delayed (4c) from the blade that has become uncontrollable (4a) by 0-180 degrees in the normal rotation direction to the fine side of a full feather position, or sets a blade that advances (4b) from the blade that has become uncontrollable (4a) by 0-180 degrees in the normal rotation direction to the negative fine side of a full feather position.

6. The horizontal shaft type windmill according to any one of claims 1 to 4, wherein
a horizontal shaft type windmill of an upwind system in which the rotor (10) is disposed on the upwind side of the tower (1) sets a blade that advances (4b) from the blade that is uncontrollable (4a) by 0-180 degrees in the normal rotation direction to the fine side of a full feather position, or sets a blade that is delayed (4c) from the blade that is uncontrollable (4a) by 0-180 degrees in the normal rotation direction to the negative fine side of a full feather position.

7. The horizontal shaft type windmill according to any one of claims 1 to 6, wherein
at the time of waiting of the horizontal shaft type windmill, the pitch angle of one of the normal blades (4b, 4c) is set to a full feather position.

8. A waiting method for a horizontal shaft type windmill comprising the step of:
setting the pitch angle of blades that are normal (4b, 4c) to a pitch angle of fine side or negative fine side upon detecting by a control unit that a rotor (10) rotates freely and the pitch angle of one of the blades has become uncontrollable (4a) when the horizontal shaft type windmill that includes the rotor (10) including a hub (2) and three pieces or more of the blades (4a, 4b, 4c), a nacelle (3) that pivots the rotor (10) through a rotational shaft connected to the hub (2), a tower (1) that supports the nacelle (3), and a control unit that controls at least the pitch angle of the blades (4a, 4b, 4c) stops power generation and shifts to a waiting state.

9. The waiting method for a horizontal shaft type windmill according to claim 8, wherein
the control unit includes pitch encoders (5) that measure the pitch angle of the respective blades (4a, 4b, 4c), pitch drive devices (8) that are driven in order to change the pitch angle of the respective blades (4a, 4b, 4c), and a control device (7) that issues commands to the pitch drive devices (8) based on the pitch angle of the respective blades (4a, 4b, 4c) measured by the pitch encoders (5) and independently controls the pitch angle of the respective blades (4a, 4b, 4c), detects by the control device (7) that the rotor (10) rotates freely and the pitch angle of one of the blades (4a) has become uncontrollable, and thereafter sets the pitch angle of the blades that are normal (4b, 4c) to a pitch angle of fine side or negative fine side by the pitch drive devices (8) based on the command from the control device (7).

10. The waiting method for a horizontal shaft type windmill according to claim 9, wherein
an event the pitch angle of one of the blades has become uncontrollable (4a) is detected by that the control device (7) detects difference between a pitch angle command value from the control device (7) and the pitch angle measured by the pitch encoder (5).

11. The waiting method for a horizontal shaft type windmill according to claim 9, wherein
an event the pitch angle of one of the blades has become uncontrollable (4a) is detected by that the control device (7) detects difference between a rotational speed of the time when the pitch encoder (5) is in failure and a designed value of the rotational speed.

12. The waiting method for a horizontal shaft type windmill according to any one of claims 8 to 11, wherein
a horizontal shaft type windmill of a downwind system in which the rotor (10) is disposed on the downwind side of the tower (1) sets a blade that is delayed (4c) from the blade that has become uncontrollable (4a) by 0-180 degrees in the normal rotation direction to the fine side of a full feather position, or sets a blade that advances (4b) from the blade that has become uncontrollable (4a) by 0-180 degrees in the normal rotation direction to the negative fine side of a full feather position.

13. The waiting method for a horizontal shaft type windmill according to any one of claims 8 to 11, wherein
a horizontal shaft type windmill of an upwind system in which the rotor (10) is disposed on the upwind side of the tower (1) sets a blade that advances (4b) from the blade that has become uncontrollable (4a) by 0-180 degrees in the normal rotation direction to the fine side of a full feather position, or sets a blade that is delayed (4c) from the blade that has become uncontrollable (4a) by 0-180 degrees in the normal rotation direction to the negative fine side of a full feather position.

14. The waiting method for a horizontal shaft type windmill according to any one of claims 8 to 13, wherein
at the time of waiting of the horizontal shaft type windmill, the pitch angle of one of the normal blades (4b, 4c) is set to a full feather position.
